# EUROPEAN PATENT SPECIFICATION

(11) **EP 1 227 128 B1**
(45) Date of publication and mention of the grant of the patent: **19.08.2009**
(21) Application number: 02002199.4
(22) Date of filing: 29.01.2002
(51) Int. Cl.: C08L 27/12, C08K 9/06, G03G 15/16, G03G 15/20

(54) **Fuser system member comprising chlorofluoro elastomer compositions**
Schmelzfixierelement mit Chlorofluoroelastomerzusammensetzungen
Élément de système fixeur comprenant des compositions de chlorofluoroélastomères

(30) Priority: 30.01.2001 US 772576
(43) Date of publication of application: 31.07.2002
(73) Proprietor: Xerox Corporation, Rochester, New York 14644 (US)
(72) Inventor: Gervasi, David J., West Henrietta, NY 14586 (US); Riehle, George A., Webster, New York 14508 (US); Heeks, George J., Rochester, NY 14617 (US); Henry, Arnold W., Pittsford, NY 14534 (US); Badesha, Santokh S., Pittsford, NY 14534 (US)
(74) Representative: Grünecker, Kinkeldey, Stockmair & Schwanhäusser Anwaltssozietät

(56) References cited:
- EP-A- 0 419 686
- EP-A- 0 738 757
- WO-A-91/05009
- US-A- 3 769 371
- US-A- 4 948 830
- US-A- 5 679 462
- US-A- 6 035 780
- PATENT ABSTRACTS OF JAPAN vol. 2000, no. 16, 8 May 2000 (2000-05-08) & JP 2001 011272 A (NIPPON MEKTRON), 16 January 2001 (2001-01-16)

## Description

### BACKGROUND OF THE INVENTION

### Field of the Invention

The invention relates to fuser system members for use in electrostatographic printing apparati.

### Description of Related Art

In a typical electrostatographic reproducing apparatus, a light image of an original to be copied is recorded in the form of an electrostatic latent image upon a photosensitive member and the latent image is subsequently rendered visible by the application of electroscopic thermoplastic resin and pigment particles which are commonly referred to as toner. The visible toner image is then in a loose powdered form and can be easily disturbed or destroyed. The toner image is usually fixed or fused upon a support which may be the photosensitive member itself or other support sheet such as plain paper.

The use of thermal energy for fixing toner images onto a support member is well known. To fuse electroscopic toner material onto a support surface permanently by heat, it is usually necessary to elevate the temperature of the toner material to a point at which the constituents of the toner material coalesce and become tacky. This heating causes the toner to flow to some extent into the fibers or pores of the support member. Thereafter, as the toner material cools, solidification of the toner causes the toner to be firmly bonded to the support.

Typically, the thermoplastic resin particles are fused to the substrate by heating to a temperature of from 90°C. to 200°C. or higher depending upon the softening range of the particular resin used in the toner. It is undesirable, however, to increase the temperature of the substrate substantially higher than 250°C. because of the tendency of the substrate to discolor at such elevated temperatures, particularly when the substrate is paper.

Several approaches to thermal fusing of electroscopic toner images have been described. These methods include providing the application of heat and pressure substantially concurrently by various means, such as a roll pair maintained in pressure contact, a belt member in pressure contact which a roll, and the like. Heat may be applied by heating one or both of the rolls, plate members or belt members. The fusing of the toner particles takes place when the proper combination of heat, pressure and contact time are provided. The balancing of these parameters to bring about the fusing of the toner particles is well known in the art, and can be adjusted to suit particular machines or process conditions.

During operation of a fusing system in which heat is applied to cause thermal fusing of the toner particles onto a support, both the toner image and the support are passed through a nip formed between the roll pair or plate or belt members. The concurrent transfer of heat and the application of pressure in the nip affects the fusing of the toner image onto the support. It is important in the fusing process that no offset of the toner particles from the support to the fuser member take place during normal operations. Toner particles that offset onto the fuser member may subsequently transfer to other parts of the machine or onto the support in subsequent copying cycles, thus increasing the background or interfering with the material being copied there. The referred to "hot offset" occurs when the temperature of the toner is increased to a point where the toner particles liquefy and a splitting of the molten toner takes place during the fusing operation with a portion remaining on the fuser member. The hot offset temperature or degradation of the hot offset temperature is a measure of the release property of the fuser roll, and accordingly it is desired to provide a fusing surface which has a low surface energy to provide the necessary release. To ensure and maintain good release properties of the fuser roll, it has become customary to apply release agents to the fuser roll during the fusing operation. Typically, these materials are applied as thin films of, for example, silicone oils to prevent toner offset.

Fusing systems using fluoroelastomers as surfaces for fuser members are described in U.S. Pat. No. 4,264,181 to Lentz et al., U.S. Pat. No. 4,257,699 to Lentz, and U.S. Pat. No. 4,272,179 to Seanor.

U.S. Pat. No. 5,017,432 describes a fusing surface layer obtained from a specific fluoroelastomer, poly (vinylidenefluoride-hexafluoropropylene-tetrafluoroethylene) where the vinylidenefluoride is present in an amount of less than 40 weight percent.
This patent further discloses curing the fluoroelastomer with VITON® Curative No. 50 (VC-50) available from E. I. Du Pont de Nemours, Inc., which is soluble in a solvent solution of the polymer at low base levels and is readily available at the reactive sites for crosslinking. This patent also discloses use of a metal oxide (such as cupric oxide) in addition to VC-50 for curing.

U.S. Pat. No. 5,061,965 to Ferguson et al. discloses an elastomer release agent donor layer comprising poly(vinylidenefluoride-hexafluoropropylene-tetrafluoroethylene) where the vinylidenefluoride is present in an amount less than 40 weight percent and a metal oxide. The release agent donor layer is cured with a nucleophilic curing agent in the present of an inorganic base.

Generally, the process for providing the elastomer surface on the fusing system member, e.g., donor roll, pressure roll, fuser roll, toner transfer belt or roller surfaces includes forming a solvent solution/dispersion by mixing a fluoroelastomer dissolved in a solvent such a methyl ethyl ketone and methyl isobutyl ketone, a dehydrofluorinating agent such as a base, for example the basic metal oxides. MgO and/or Ca(OH)₂, and a nucleophilic curing agent such as VC-50 which incorporates an accelerator and a crosslinking agent, and coating the solvent solution/dispersion onto the substrate. The surface is then stepwise heat cured.
Prior to the stepwise heat curing, ball milling is usually performed, for from 2 to 24 hours.

While these and other fluoroelastomers have proven satisfactory as fuser release surfaces, it is desirable to provide elastomeric materials having even lower surface energy wherein release properties are further enhanced. It is also desirable to provide elastomers as fuser release surfaces possessing improved physical properties, enhanced wear resistance and reduced chemical reactivity with toner resins and additives, paper fibers and other potential contaminants within the fusing subsystem.

EP-A-419686 discloses a composition comprising a blend of a fluoroplastic and a fluoroelastomer. The fluoroplastic may be a copolymer of chlorotrifluoroethylene and vinylidene fluoride. The fluoroelastomer may be a terpolymer of vinylidene fluoride, tetrafluoroethylene and hexafluoropropylene. The composition may be cured.

JP-A-2001-011272 discloses a fluorine-containing polymer composition obtained by mixing (a) a fluororesin optionally having crosslinking sites with (b) a fluorine-containing elastomer having crosslinking sites. The fluororesin may be a copolymer of vinylidene fluoride and chlorotrifluoroethylene. The fluorine-containing elastomer may be a terpolymer of vinylidene fluoride, tetrafluoroethylene and hexafluoropropylene.

### SUMMARY OF THE INVENTION

The present invention provides a fuser system member comprising a supporting substrate and an outer surface layer comprising an elastomer composition comprising a cured blend of (a) a fluoroelastomer comprising a terpolymer of vinylidene fluoride, tetrafluoroethylene and hexafluoropropylene; and (b) a chlorofluoroelastomer comprising a copolymer or terpolymer of vinylidene fluoride, chlorotrifluoroethylene and up to 40 mole percent of a monomer selected from the group consisting of hexafluoropropylene and tetrafluoroethylene; wherein said fluoroelastomer is present in said composition at a level of from 5 to 95% by weight of the elastomer content of said composition.

Preferred embodiments of the invention are set forth in the sub-claims.

The cured composition used in the present invention provides for a lower surface energy coating having enhanced toner release properties thereby reducing the tendency for toner to offset back to the surface of the fuser member during the electrostatographic printing process. The cured composition also exhibits improved wear and physical properties over similar fluoroelastomer compositions currently used in fusing applications.

### DETAILED DESCRIPTION OF THE INVENTION

The fluoroelastomers useful in the practice of the present invention are those described in detail in U.S. Pat. No. 4,257,699 to Lentz, as well as those described in commonly assigned U.S. Pat. Nos. 5,017,432 to Eddy et al. and 5,061,965 to Ferguson et al. These fluoroelastomers are known commercially under various designations such as Viton A, Viton E60C, Viton E430, Viton 910, Viton GH, Viton GF and Viton F601C. The Viton designation is a Trademark of E.I. Dupont deNemours, Inc. Other commercially available materials include Fluorol 2170, Fluorol 2174, Fluorol 2176, Fluorol 2177 and Fluorol LVS 76, Fluorol being a Trademark of 3M Company. These fluoroelastomers can be cured with a nucleophilic additive curing system, such as a bisphenol crosslinking agent with an organophosphonium salt accelerator as described in further detail in the above referenced Lentz Patent and in the Eddy et al. patent or with a peroxide in which case a cure site monomer such as bromomethyl perfluorovinyl ether is also necessary.

A particularly preferred embodiment of the hydrofluoroelastomer is that described in U.S. Pat. No. 5,017,432 to Eddy et al. which provides a fuser member surface layer comprising polyvinylidenefluoride-hexafluoropropylene-tetrafluoroethylene-cure site monomer (believed to contain bromine) wherein the vinylidenefluoride is present in an amount of less than 40 weight percent and which is cured from a dried solvent solution thereof with a nucleophilic curing agent soluble in the solvent solution and in the presence of less than 4 parts by weight inorganic base per 100 parts of polymer, the inorganic base being effective to at least partially dehydrofluorinate the vinylidenefluoride.
These materials are described in greater detail in U.S. Pat. No. 5,017,432. The nucleophillic curing system is further described in greater detail in U.S. Pat. No. 4,272,179 to Seanor and U.S. Pat. No. 4,264,101 to Lentz et al.

The chlorofluoro elastomers which provide the chlorofluoroelastomeric component in this invention include co-and terpolymers comprising vinylidene fluoride, chlorotrifluoroethylene and up to 40 mole percent of at least one monomer selected from hexafluoropropylene and tetrafluoroethylene. These are analogous to the fluoroelastomers described above except that they contain some chloro substituent groups which tend to enhance the solubility of these polymers in organic solvents and further facilitate co-crosslinking with the fluoroelastomer component of the blend. Suitable chlorofluoroelastomers include copolymers of vinylidene fluoride with chlorotrifluoroethylene and terpolymers comprising the above two monomers with up to 40 mole percent of hexafluoropropylene or tetrafluoroethylene. Preferred copolymers contain from 20 to 40 mole % vinylidene fluoride and correspondingly from 60 to 80 mole % chlorotrifluoroethylene; preferred terpolymers contain from 15 to 25 mole % vinylidene fluoride,from 35 to 84 mole % chlorotrifluoroethylene and from 1 to 40 mole % of either hexafluoropropylene or tetrafluoroethylene.

Chlorofluoroelastomers particularly suitable for use in the invention are more specifically described in U.S. Patents 3,988,502 and 4,032,699.

These elastomers are blended in a ratio such that either elastomer comprises from 5 to 95 wt% of the elastomeric content of the composition. Preferably the fluoroelastomer will constitute at least 50 wt% of the elastomer content of the composition.

The fluoro and chlorofluoro elastomer blend may be cocured (covulcanized) using any of the nucleophilic, free radical or amine curing systems which are well known in the art for curing fluoroelastomers. Nucleophilic curing systems may include a bispehnol crosslinking agent and an organophosphonium salt accelerator. Typically, the curing process takes place in the presence of 8 to 10 parts by weight of inorganic base per 100 parts of polymer. The inorganic base dehydrofluorinates the vinylideneflouride in the polymer creating double bonds which act as reactive sites for crosslinking. However, the presence of excess base results in the long term degradation of the elastomers and if excess base continues to dehydrofluorinate the vinylidenefluoride generating double bonds which cause the toner member to harden, subsequent oxidation causes the surface energy to increase and the release performance to degrade. Thus, it is preferred to cure the polymer at a relatively low base level to control the reactivity of the vinylidenefluoride.

A typical nucleophilic curing system is disclosed in U.S. Patent 4,272,179.

Other curatives which can be employed include peroxides, hydrides, bases, oxides, and amines. Examples of strong nucleophilic agents include primary, secondary and tertiary aliphatic and aromatic amines, as well as amino silanes such as disclosed in U.S. Patents 5,700,568 and 5,729,813.

Other adjuvants and fillers may be incorporated in the elastomer composition used in accordance with the present invention provided that they do not adversely effect the integrity of the fluoroelastomer. Such fillers normally encountered in the compounding of elastomers include coloring agents, reinforcing fillers such as carbon black and silica, and processing aids. Also: Aluminum oxide, indium tin oxide, antimony tin oxide, silicon carbide, zinc oxide and boron nitride may be included as fillers, which may be present at a level of from 1 to 20 volume percent. Oxides such as copper oxides may be added in certain amounts such as, for example, from 1 to 10 volume percent, to fuser roll coatings to provide sufficient anchoring sites for functional release oils and thereby allow excellent toner release characteristics from such members. Fillers may optionally be pre-treated or treated in solution with silane coupling agents to improve filler incorporation into the polymer network.

The substrate for the fuser member of the fuser system assembly may be a roll, belt, flat surface or other suitable shape used in the fixing of thermoplastic toner images to a suitable substrate. It may take the form of a fuser member, a pressure member or a release agent donor member, preferably in the form of a cylindrical roll. Typically, the substrate takes the form of a cylindrical tube of aluminum, copper, steel or certain plastic materials chosen to maintain rigidity and structural integrity as well as being capable of having the elastomer coated thereon and adhered firmly thereto. The diameter of the substrate is from 10 to 100 mm, and preferably from 40 to 75 mm. It is preferred that the supporting substrate is a cylindrical sleeve having an outer layer of from 1 to 6 mm. In one embodiment, the core, which may be a steel cylinder is degreased with a solvent and cleansed with an abrasive cleaner prior to being primed with a primer, such as Dow Corning 1200, which may be sprayed, brushed or dipped, followed by air drying under ambient conditions for thirty minutes and then baked at 150° C for 30 minutes.

The outer layer of the fuser member is preferably prepared by dissolving the elastomer in a typical solvent such as methyl ethyl ketone or methyl isobutyl ketone. A nucleophilic dehydrofluorinating agent is then added followed by stirring for 1 to 60 minutes at 45° to 85° C. The resulting solution is then used to fabricate the outer layer of a fuser member by conventional solution coating methods, spraying, dipping or flow coating. The coating thickness can vary depending upon specific applications from 10 to 250 micrometers thick. The coating is first air dried and then step heat cured is in air. For fuser applications, the thickness of the dry fluroelastomer layer could be any suitable thickness, for example, from 25 to 75 and preferably from 35 to 50 micrometers. This thickness range is selected to provide a layer thin enough to prevent a large thermal barrier for fusing and thickness enough to allow a reasonable wear life. While molding, extruding and wrapping techniques are alternative means which may be used, it is preferred to spray or flow-coat successive applications of the solvent solution. When the desired thickness of coating is obtained, the coating is cured and thereby bonded to the roll surface.

The curing time, is for example, from 30 minutes to 24 hours and the preferred time is from 1 to 4 hours, and particularly preferred is from 1 to 2 hours. The temperature for curing is from 100° to 150° C., and preferably from 130° to 150° C.

The following example is illustrative of the invention. As used in the example, FK-800 is a copolymer of chlorotrifluoroethylene and vinylidene fluoride containing about 74 wt% chlorotrifluoroethylene (available from 3M or Mach 1, Inc. King of Prussia, PA) and Viton GF is a terpolymer of 35 wt% vinylidene fluoride, 34 wt% hexafluoropropylene and 29 wt% tetrafluoroethylene available from Dupont.

### Example 1

Several 20% solids solution comprising varying weight percentages of FK-800 and Viton GF in methyl isobutyl ketone was prepared. An appropriate amount of an aminosilane, aminoethyl-aminopropyl trimethoxysilane (AO700, available from United Chemical Technologies), was added to each solution to provide a cured composition possessing a similar crosslink density value, i.e. approximately 1 x 10⁻⁴ moles of chains per cubic centimeter as measured by the Flory-Rehner equation. This solution along with identical control solutions containing only Viton GF as the elastomer components were placed in a small glass dish and allowed to desolvate. The resulting films were then soaked overnight in methylethyl ketone with no apparent solubilizing which indicated a crosslinked matrix. The Test films were submitted for physical properties. Data and more information on the compositions is in Table 1

**Table 1 - Table of Tested Films, Properties**

| Composition I.D. | 1 | 2 | 3 | 4 |
|---|---|---|---|---|
| Wt. Percent FK-800 | 100 | 85 | 70 | 55 |
| Wt. Percent Viton GF | 0 | 15 | 30 | 45 |
| A0700, pph | 5 | 7 | 8 | 9 |
| Tensile Strength, PSI | 1265 | 1325 | 1704 | 1572 |
| Elongation, % | 382 | 242 | 308 | 204 |
| Toughness, in-lb/in³ | 2004 | 1707 | 2954 | 2094 |
| Initial Modulus, PSI | 630 | 1479 | 2183 | 3847 |
| Release Strength, oz./in-width | 18.3 | 12.9 | 11.8 | 9.1 |
| Abrasion Resistance, mg.loss/500 cycles | 59.2 | 77.5 | 73.3 | NT (not tested) |

It should be noted that the physical properties are more plastic-like with addition of FK-800, as the initial modulus increased. The other properties important for fusing materials increase as well, while maintaining a comparable elongation (percent strain at break) as compared to the control material, Viton GF 100%.

## Claims

1. A fuser system member comprising a supporting substrate and an outer surface layer comprising an elastomer composition comprising a cured blend of:
a) a fluoroelastomer comprising a terpolymer of vinylidene fluoride, tetrafluoroethylene and hexafluoropropylene; and
b) a chlorofluoroelastomer comprising a copolymer or terpolymer of vinylidene fluoride, chlorotrifluoroethylene and up to 40 mole percent of a monomer selected from the group consisting of hexafluoropropylene and tetrafluoroethylene; said fluoroelastomer being present in said composition at a level of from 5 to 95% by weight of the elastomer content of said composition.

2. The fuser system member of claim 1, wherein said fluoroelastomer is present in said composition at a level of at least 50% by weight of the elastomer content of said composition.

3. The fuser system member of claim 1, wherein the supporting substrate is a fuser roll, a pressure roll or a release agent donor roll.

4. The fuser system member of claim 1, wherein the supporting substrate is a cylindrical sleeve, a drum or a belt.

5. The fuser system member of claim 1, wherein said outer surface layer has a thickness of from 10 to 250 micrometers.

6. The fuser system member of claim 1, wherein said elastomer composition further includes a filler material.

7. The fuser system member of claim 6, wherein said filler is treated with a silane coupling agent.

## Patentansprüche

1. Element eines Schmelzfixiersystems, umfassend ein Trägersubstrat und eine äußere Oberflächenschicht, umfassend eine Elastomerzusammensetzung, umfassend eine gehärtete Mischung aus:
a) einem Fluorelastomer, umfassend ein Terpolymer von Vinylidenfluorid, Tetrafluorethylen und Hexafluorpropylen; und
b) einem Chlorfluorelastomer, umfassend ein Copolymer oder Terpolymer von Vinylidenfluorid, Chlortrifluorethylen und bis zu 40 mol% von einem Monomer, ausgewählt aus der Gruppe bestehend aus Hexafluorpropylen und Tetrafluorethylen;
wobei das Fluorelastomer in der Zusammensetzung in einem Anteil von 5 bis 95 Gew.-% des Elastomergehalts der Zusammensetzung vorhanden ist.

2. Element eines Schmelzfixiersystems nach Anspruch 1, wobei das Fluorelastomer in der Zusammensetzung in einem Anteil von wenigstens 50 Gew.-% des Elastomergehalts der Zusammensetzung vorhanden ist.

3. Element eines Schmelzfixiersystems nach Anspruch 1, wobei das Trägersubstrat eine Schmelzfixierwalze, eine Andruckwalze oder eine Trennmitteldonorwalze ist.

4. Element eines Schmelzfixiersystems nach Anspruch 1, wobei das Trägersubstrat eine zylindrische Manschette, eine Trommel oder ein Band ist.

5. Element eines Schmelzfixiersystems nach Anspruch 1, wobei die äußere Oberflächenschicht eine Dicke von 10 bis 250 Mikrometer aufweist.

6. Element eines Schmelzfixiersystems nach Anspruch 1, wobei die Elastomerzusammensetzung außerdem ein Füllstoffmaterial einschließt.

7. Element eines Schmelzfixiersystems nach Anspruch 6, wobei der Füllstoff mit einem Silanhaftvermittler behandelt ist.

## Revendications

1. Elément de système fixeur comprenant un substrat support et une couche de surface extérieure comprenant une composition d'élastomère comprenant un mélange durci de :
a) un fluoroélastomère comprenant un terpolymère de fluorure de vinylidène, de tétrafluoroéthylène et d'hexafluoropropylène ; et
b) un chlorofluoroélastomère comprenant un copolymère ou un terpolymère de fluorure de vinylidène, de chlorotrifluoroéthylène et jusqu'à 40 pour cent en mole d'un monomère choisi dans le groupe composé de l'hexafluoropropylène et du tétrafluoroéthylène ;
ledit fluoroélastomère étant présent dans ladite composition à un taux de 5 à 95% en poids de la teneur en élastomère de ladite composition.

2. Elément de système fixeur selon la revendication 1, dans lequel ledit fluoroélastomère est présent dans ladite composition à un taux d'au moins 50% en poids de la teneur en élastomère de ladite composition.

3. Elément de système fixeur selon la revendication 1, dans lequel le substrat support est un rouleau fixeur, un rouleau de pression ou un rouleau donneur d'un agent antiadhérent.

4. Elément de système fixeur selon la revendication 1, dans lequel le substrat support est un manchon cylindrique, un tambour ou une courroie.

5. Elément de système fixeur selon la revendication 1, dans lequel la couche de surface extérieure a une épaisseur de 10 à 250 micromètres.

6. Elément de système fixeur selon la revendication 1, dans lequel ladite composition d'élastomère comprend en outre une matière de remplissage.

7. Elément de système fixeur selon la revendication 6, dans lequel ladite matière de remplissage est traitée avec un agent de couplage silane.
